## Europäisches Patentamt
## European Patent Office
## Office européen des brevets

(19)

(11) Veröffentlichungsnummer: **0 118 618**
**B1**

(12) # EUROPÄISCHE PATENTSCHRIFT

(45) Veröffentlichungstag der Patentschrift:
05.11.86

(21) Anmeldenummer: 83112751.9

(22) Anmeldetag: 18.12.83

(51) Int. Cl.⁴: **B 01 D 39/00,** B 01 D 53/02,
A 62 B 17/00

(54) Flächenfilter.

(30) Priorität: 09.02.83 DE 3304349

(43) Veröffentlichungstag der Anmeldung:
19.09.84 Patentblatt 84/38

(45) Bekanntmachung des Hinweises auf die Patenterteilung:
05.11.86 Patentblatt 86/45

(84) Benannte Vertragsstaaten:
AT BE CH DE FR GB IT LI LU NL SE

(56) Entgegenhaltungen:
DE-A-2 951 827
FR-A-2 353 327

(73) Patentinhaber: von Blücher, Hubert, Freytagstrasse
45, D-4000 Düsseldorf (DE)
Patentinhaber: von Blücher, Hasso, Sohnstrasse 58,
D-4000 Düsseldorf (DE)
Patentinhaber: de Ruiter, Ernest, Dr.,
Höhenstrasse 57a, D-5090 Leverkusen 3 (DE)

(72) Erfinder: von Blücher, Hubert, Freytagstrasse 45,
D-4000 Düsseldorf (DE)
Erfinder: von Blücher, Hasso, Sohnstrasse 58,
D-4000 Düsseldorf (DE)
Erfinder: de Ruiter, Ernest, Dr., Höhenstrasse 57a,
D-5090 Leverkusen 3 (DE)

(74) Vertreter: Eggert, Hans- Gunther, Dr.,
Räderscheidtstrasse 1, D-5000 Köln 41 (DE)

EP 0 118 618 B1

## Beschreibung

Der Einsatz von Adsorbentien empfiehlt sich, wenn aus einem Gemisch gezielt Substanzen entfernt werden sollen. Unter den Adsorbentien nimmt die Aktivkohle (A-Kohle) eine besondere Stellung ein, die der hohen Adsoptionskapazität infolge einer sehr großen inneren Oberfläche und dem verhältnismäßig unspezifischen Adsorptionsvermögen, d.h. einer physikalischen Adsorption zuzuschreiben ist. Darüber hinaus kann durch die Wahl des Ausgangsmaterials und die Art der Aktivierung die A-Kohle dem jeweiligen Verwendungszweck angepaßt werden.

Eine wichtige Anwendung von A-Kohle sind flexible Flächenfilter, welche in der Industrie, im Haushalt, aber auch bei Schutzbekleidung verwendet werden. Sie bestehen üblicherweise aus einem Träger, der häufig ein textiles Flächengebilde ist, auf den durch Tauchen und Abquetschen ein Gemisch von Bindemittel und Adsorbens aufgetragen ist. Der Binder führt zu einer reduzierten Adsorptionsleistung und bei textilen Flächengebilden immer zu unerwünschten Griffveränderungen durch Verkleben der Fäden, was besonders für Bekleidungszwecke (Schutzbekleidung) ein Handicap ist.

Der Erfindung liegt die Aufgabe zugrunde, Flächenfilter aus einem luftdurchlässigen, flexiblen, insbesonde textilen Trägermaterial und einem darauf fixierten Adsorbens zu schaffen, bei denen durch die besonderen Auswahl der Adsorberteilchen und ihrer Verankerung auf dem Trägermaterial dafür gesorgt wird, das neben optimalen Adsorptionseigenschaften hohe Flexibilität, gute Abriebfestigkeit und hohe Luftdurchlässigkeit gewährleistet sind.

Die Menge der Adsorberteilchen sollte gleichmäßig verteilt sein, um eine gleichmäßige Filterleistung mit geringer Streuung und eine dementsprechend gute Schutzwirkung bei geringem Abrieb zu erreichen. Außerdem sollte das verbesserte Flächenfilter ein geringes Volumen besitzen und gute Waschbarkeit ohne Qualitätsverluste ermöglichen.

Gegenstand der Erfindung ist ein Flächenfilter aus einem luftdurchlässigen textilen Trägermaterial und darauf mit einem Kleber in gleichmäßiger Verteilung fixierten Aktivkohleteilchen eines Durchmessers von 0,1 bis 1 mm, bei dem der Kleber ein lösungsmittelfreies Polyurethan, ein selbstvernetzendes Acrylat als punkt- oder linienförmiges Muster einer Höhe von 0,05 bis 0,5 mm und eines Durchmessers bzw. einer Breite von 0,2 bis 1 mm aufgedruckt wurde, das nur 30 bis 70 % der Oberfläche des Trägermaterials bedeckt.

Vorzugsweise haben die Aktivkohleteilchen eine innere Oberfläche von 600 bis 1500 $m^2$/g und einen Durchmesser von 0,2 bis 0,4 mm.

Durch die Wahl der Schablone wird die für die Adsorption wichtige Geometrie und der für die Luftdurchlässigkeit maßgebende Anteil an unbedruckter Fläche bestimmt. Die aufgetragene Menge des Klebstoffs ist innerhalb weniger Prozent konstant und gleichmäßig über die gesamte Warenbreite verteilt. Das auf die eine oder andere Weise aufgebrachte Muster des Klebers hat vorteilhaft eine Höhe von 0,05 bis 0,5 mm und einen Durchmesser bzw. eine Breite von 0,1 bis 5, vorzugsweise 0,2 bis 1 mm. Am besten ist der Kleber punktförmig aufgebracht und die Kleberhäufchen haben die Form einer Halbkugel bzw. eines Kegels. Auf diese Weise sind der Kleber und damit auch die daran fixierten Aktivkohleteilchen statistisch weitgehend einheitlich auf die Oberfläche des Trägermaterials verteilt.

Als Adsorbens kommen für die Zwecke der Erfindung bekannte adsorbierende Materialien wie zum Beispiel Kieselsäurexerogele, Metalloxide und -hydroxide, insbesondere Aluminiumoxid und -hydroxid, Molekularsiebe, Ionenaustauscher und Aktivkohlen verschiedener Provenienzen infrage. Es wurde festgestellt, daß die Korngröße des Adsorbens eine wichtige Rolle spielt. Ist sie zu klein, so ist auch die Adsorptionskapazität zu gering, ist sie zu groß, wird die Adsorptionskinetik ungünstig. Besonders bei Aktivkohle hat sich eine Korngröße von 0,1 bis 1 mm, insbesondere 0,2 bis 0,4 mm für viele Verwendungen als guter Kompromiß herausgestellt. Es muß aber auch die Abriebfestigkeit berücksichtigt werden, die einerseits von der Verankerung der Adsorberteilchen, andererseits von ihrer Festigkeit und ihrer Form abhängt. Die Teilchen haben bedingt durch ihre Herstellung meist die Form kleiner Zylinder, Quader oder Kugeln. Die Kugelform wird in der Regel bevorzugt. Die Aktivkohle hat zweckmäßig eine innere Oberfläche von 600 bis 1500 $m^2$/g. Die Menge des aufgetragenen Adsorbens, insbesondere der A-Kohle beträgt 10 bis 250 g/$m^2$, vorzugsweise 60 bis 150 g/$m^2$.

Die Aktivkohle kann aus geeigneten organischen Materialien in bekannter Weise hergestellt werden. Eine sehr brauchbare Aktivkohle erhält man beispielsweise aus Bitumen, wenn man daraus über dem Erweichungspunkt in einem mit Bitumen nur begrenzt mischbaren Medium, z.B. Wasser unter Druck eine Dispersion herstellt, diese abschreckt, die erhaltenen Bitumenkügelchen mit einem geeigneten Lösungsmittel extrahiert, mit Schwefelsäure oxydiert, carbonisiert und schließlich aktiviert. Das verwendete Bitumen kann natürliches Bitumen oder ein aus Erdölrückständen gewonnenes Bitumen sein. Je nach Ausgangsmaterial wird, gegebenenfalls durch Lufteinblasen, der Schmelzpunkt erhöht, so daß das Bitumen bei 100 bis 150° C gerade noch dispergiert werden kann. Bitumen mit zu hohem Schmelzpunkt kann mit Steinkohlenteer verdünnt werden, um in dem genannten Temperaturbereich zu feinen Tröpfchen dispergierbar zu sein. Durch Abschrecken der Tröpfchen erhält man Bitumenkügelchen, die beispielsweise auf einem Siebband abgelagert und anschließend mit einem geeigneten Lösungsmittel extrahiert werden. Hierfür empfiehlt sich ein Benzol-Methanol-Gemisch, weil der Zusatz von Methanol das Lösevermögen des Benzols erheblich verstärkt. Diese Extraktion hat einen doppelten Zweck:

1. erhöht sich durch Herauslösen von niedermolekularen Komponenten der Schmelzpunkt und die Klebrigkeit wird vermindert, was für die weiteren Verfahrensstufen wichtig ist.

2. Entsteht eine mikroporöse Struktur, welche die anschließende Oxidation sehr erleichtert.

Die Extraktion wird bevorzugt in geschlossenen Reaktoren bei Temperaturen zwischen 30 und 100°C durchgeführt. Der extrahierte Anteil kann zwischen 15 und 60 % schwanken und beträgt in der Regel etwa 35 %. Nach Wiedergewinnung des Lösungsmittels können die extrahierten Anteile zur Verdünnung des eingesetzten hochviskosen Bitumens verwendet werden.

Die extrahierten Bitumenkügelchen werden anschließend zwecks weiterer Erhöhung des Schmelzpunktes und der Porosität mit konzentrierter Schwefelsäure getränkt und nach und nach insbesondere im Wirbelbett bis auf 700°C erhitzt. Dabei findet bis etwa 350°C eine kräftige Oxidation unter Abspaltung von Schwefeldioxid statt, während im höheren Temperaturbereich vornehmlich sauerstoffhaltige Kohlenstoffverbindungen, insbesondere viel $CO_2$ abgespalten werden. Gewichtsverlust durch die Oxidation und Pyrolyse liegt je nach Ausgangsmaterial zwischen 5 und 20 %. Anschließend werden die carbonisierten Kokekügelchen in üblicher Weise aktiviert.

Die Aktivierung wird insbesondere mit Wasserdampf in einer Wirbelschicht bei 800 bis 900°C vorgenommen. Auch andere bekannte Aktivierungsverfahren sind anwendbar.

Eine Alternative zur Schwefelsäureoxidation ist die Luftoxidation bei Temperaturen von 100 bis 400°C, wobei der Sauerstoffgehalt bis über 10 % ansteigen kann, gefolgt von einer Pyrolyse bei 600 bis 700°C.

Eine Alternative der Herstellung von carbonisierten Kohlekügelchen aus Bitumen besteht darin, geschmolzenes Bitumen zu der gewünschten Tröpfchengröße zu zerstäuben und diese Tröpfchen mit einem inerten Gas durch eine auf 800 bis 1.600°C aufgeheizte Zone zu schicken. Durch diese Behandlung wird zunächst die äußere Schicht der Tröpfchen carbonisiert und dann auch das innere Bitumen.

Eine andere Möglichkeit, für die Zwecke der Erfindung besonders brauchbare A-Kohle-Kügelchen herzustellen, besteht darin, daß organische Kationenaustauscher im Wirbelbett rasch auf 600 bis 700°C erhitzt und anschließend, z.B. mit Wasserdampf aktiviert werden. Die organischen Kationenaustauscher, insbesondere sulfonierte Styrol-Divinylbenzol-Copolymere, sollten in der H+-Form vorliegen. Sie können aber auch Schwermetallionen, z.B. Ni-Ionen, enthalten. Die im Ionenaustauscher vorgegebene Porosität wirkt sich sehr günstig aus, während die Sulfongruppen carbonisierend und oxidierend wirken. Die Festigkeit der erhaltenen Adsorberkügelchen ist ausreichend, wenn auch etwas geringer als die des aus Bitumen hergestellten Materials. Die aus Bitumen in der beschriebenen Weise hergestellten Aktivkohlekügelchen haben eine harte Schale und einen etwas weicheren Kern. Die innere Oberfläche beträgt etwa 600 bis 1500 m²/g mit verhältnismäßig hohem Anteil an Mesoporen ($10$-$15.10^{-10}$m).

Im Rahmen der beschriebenen Zielsetzung wurden Kugeldurchmesser von 0,1 bis 1 mm mit Schwerpunkt bei 0,2 bis 0,4 mm erhalten, jedoch sind hiervon abweichende Durchmesser durchaus erreichbar. Die Abriebfestigkeit ist dank der besonders harten Schale sehr hoch.

Für besondere Anwendungen können die Adorberkügelchen zum Schutz gegen unerwünschte äußere Einflüsse ummantelt bzw. inkapsuliert werden. Das geschieht durch Umhüllen mit einer dünnen Schicht aus Polymeren, die eine selektive Durchlässigkeit für die zu adsorbierenden Substanzen besitzt. So gelingt es beispielsweise, Aktivkohleteilchen durch vorbehandlung mit Acrylatdispersionen, z.B. Acronal 50 D und 27 D der BASF, mit einem Häutchen aus Makromolekülen zu umgeben, das zwar für Kampfstoffe durchlässig ist, jedoch nicht für Druckereihilfsmittel. Eine andere Möglichkeit die Adsorbenskörner zu inkapsulieren, besteht darin, daß man sie in einem Zweikomponentengebläse mit Polyamidpulver möglichst gleicher Teilchengröße etwa im Mengenverhältnis 1:1 verwirbelt und durch einen Gasflammenrohrofen gegen ein gekühltes, spiegelverchromtes Stahlblech schleudert. Das im Gasflammenrohrofen erweichte Polyamid legt sich im Luftstrom um das Adsorberteilchen und verfestigt sich dort beim Austritt aus dem Flammrohr im gekühlten Luftstrom. Jeder Verklebung der so mit Polyamid umhüllten Adsorbenskörner untereinander wird durch Auftreffen auf das bis etwa -15°C heruntergekühlte spiegelverchromte Stahlblech entgegengewirkt. Andere bekannte Prozesse zur Mikroinkapsulation der Adsorbenskörner mit verschiedenen anorganischen oder organischen Hüllmaterialien können ebenfalls verwendet werden.

Die Inkapsulierung von Kohleteilchen kann außer mit den schon beschriebenen Prozessen, beispielsweise dadurch erfolgen, daß man unter ständiger Bewegung des Kohlepulvers kontinuierlich kleinste Mengen geeigneter Latices, z.B. eine Acrylatdispersion zugibt. Diese koagulieren dann an der Oberfläche.

Die Dicke der Inkapsulierungsschichten kann sich von der Größenordnung des Durchmessers der Makromoleküle bis in den μm-Bereich bewegen. In jedem Fall sollten die dünnen Inkapsulierungsschichten der Adsorberteilchen eine selektive Durchlässigkeit besitzen, so daß sie zwar für die zu adsorbierenden Substanzen, wie z.B. Kampfstoffe, durchlässig sind, aber nicht für den Kleber, Schweiß, Waschmittel, Öle und Fette. Letzteres ist bei der Verwendung solcher Flächenfilter im mehrlagigen Aufbau von Schutzanzügen von Bedeutung, um eine Inaktivierung durch längeres Tragen bei schwerster körperlicher Beanspruchung zu verhindern, um einen hohen und langandauernden Schutz gegen Giftgase etc. zu gewährleisten.

Um die Adsorberkügelchen, insbesondere die erfindungsgemäß aus Bitumen oder Ionenaustauschern mit Sulfon- oder Sulfonatgruppen hergestellten A-Kohle-Kügelchen auf dem flexiblen Trägermaterial zu verankern bedarf es eines Klebers, der neben hoher mechanischer Festigkeit und Elastizität sowie einem gewissen Penetrationsvermögen auch eine ausreichende Anfangsklebrigkeit haben muß, um die aufgestreuten Adsorberteilchen bis zum Erreichen der Festigkeit festzuhalten. Für die Zwecke der Erfindung werden als Kleber lösungsmittelfreie Polyurethane, wie sie z.B. unter der Bezeichnung "High Solids" ® im Handel sind, selbstvernetzende Acrylate oder Schmelzkleber eingesetzt, deren Basis meist Polyamide, Polyester oder Ethylen-Vinylacetat-Copolymere EVA sind.

Beim Druck liegen die polymeren Bindemittel und die Schmelzkleber meist als Dispersion vor. In dem aufgedruckten Muster verbleiben dann aber nur die Polymeren verfestigten, beispielsweise vernetzten oder vulkanisierten Bindemittel.

Nach einer bevorzugten Ausführungsform der Erfindung werden dem Kleber Flammschutzmittel beigemischt, die bei richtiger Auswahl den gesamten Flächenfilter schwer entflammbar machen. Bevorzugte Flammschutzmittel sind solche auf Basis von Antimontrioxid in Kombination mit Bromverbindungen. Diese wirken als Radikalfanger in der Gasphase und haben damit eine gewisse Abstandswirkung. Weil bei dem erfindungsgemäßen Flächenfilter diese Flammschutzmittel linien- oder punktförmig aufgetragenen Kleber für die Adsorbentien beigemischt sind, kommt es zu keiner wesentlichen Veränderung des Griffs des textilen Flächengebildes. Diese Art des Flammschutzes erspart eine zusätzliche Ausrüstung der Trägerbahn.

Schließlich führt der Zusatz von Treibmitteln zum Kleber zur Bildung von kleinen, mit Adsorbern bedeckten Erhebungen, welche für das gasdynamische Verhalten vorteilhaft sind. Besonders bei der Verwendung von High Solids verhindert das Treibmittel durch Schaumbildung zusätzlich ein zu starkes Eindringen bzw. Wegsacken des Klebers in den Träger, kurz bevor die Vernetzung einsetzt.

Der mit Kleber und Zusätzen bedruckte Träger wird erfindungsgemäß mit den Adsorbern vollflächig bestreut und der nicht haftende Überschuß entfernt. Anschließend wird das Material zwecks Aushärtung des Klebers in einem Spannrahmen oder Wärmekanal kondensiert. Das so erhaltene flexible Filtermaterial hat eine ausgezeichnete Luftdurchlässigkeit, sehr gute Abriebfestigkeit und eine hohe Filterleistung. Die Abriebfestigkeit genügt den normalen Ansprüchen; sie kann erforderlichenfalls weiter erhöht werden, indem direkt auf die Adsorber ein mit z.B. Schmelzkleberpunkten bedrucktes textiles Flächengebilde thermisch aufkaschiert wird, ohne daß hierdurch die Adsorptionsleistung beeinträchtigt wird.

Die hohe Luftdurchlässigkeit bzw. die damit verbundene hohe Wasserdampfdurchlässigkeit des erfindungsgemäßen Filtermaterials macht dies besonders geeignet für Schutzanzüge, bei welchen das Abführen der Körperwärme eine wichtige zusätzliche Forderung ist.

Eine weitere Steigerung der Wirksamkeit läßt sich dadurch erreichen, indem den Adsorbern inkapsulierte Enzyme zugefügt werden. Damit das Gel erhalten bleibt, muß die schützende Membrane die Verdunstung des Wassers verhindern, jedoch für die zu zerstörenden Substanzen (z.B. Kampfstoffe) durchlässig sein. Es ist auch möglich, mit dem Enzym verträgliche, Feuchtigkeit anziehende Stoffe dem Gel zuzufügen, so daß sich das Gel mit der Luftfeuchtigkeit im Gleichgewicht befindet.

Enzyme, die Lost und Nervengifte abbauen, stehen bereits in inkapsulierter Form zur Verfügung. Ein Flächenfilter, welches sowohl Adsorbentia wie geeignete Enzyme besitzt, ist für den C-Schutz besonders geeignet, da eine Art Selbstentgiftung stattfindet. Auf die Adsorbentien kann dabei nicht verzichtet werden, weil diese als Zwischenstation fungieren: Dabei ist es wichtig, daß das Mesoporen system zwecks schneller Adsorption, aber auch Wiederabgabe an das Enzym gut ausgebildet ist.

Alles was bereits über die Art des Aufbringens der Adsorberteilchen gesagt wurde, gilt auch für die inkapsulierten Enzyme. Auch hier ist das Auftragen einer unterbrochenen Kleberschicht und das anschließende Bestreuen mit den inkapsulierten Gel-Tröpfchen die vorteilhafteste Art des Fixierens:

Der Träger bleibt geschmeidig und das Enzym ist gut zugänglich. Dabei ist natürlich darauf zu achten, daß Bestandteile des Klebers weder die Membrane noch das Enzym selbst schädigen und man ohne höhere Temperaturen auskommt. In der praktischen Anwendung kann man z.B. erst das Adsorbens in der beschriebenen Art aufbringen und anschließend die noch unbeladene Seite des Trägers benutzen, um die das Enzym enthaltenden inkapsulierten Gel-Kügelchen zu fixieren.

**Beispiel 1**

Herstellung der Adsorber-Kügelchen

Bitumen aus einem Erdöldestillationsrückstand mit Erweichungspunkt um 120°C wurde unter Druck in Wasser bei 160°C dispergiert, abgeschreckt auf 15°C und die erhaltenen Kügelchen auf einem Siebband vom Wasser getrennt. Die Elementaranalyse (Waf-Basis) lautete:

% C 91,7
% H 4,2
% N 1,2
% S 0,8
% O 2,1

Sodann wurden die Kügelchen bei 70°C in Benzol/Methanol (2:1) extrahiert. Der Extraktionsverlust betrug 36 %. Der Rückstand fühlte sich trocken an und zeigte bei 250°C noch keine nennenswerte Erweichung.

Die Elementaranalyse (Waf) lautetet:

% C 91,2
% H 3,7
% N 1,3
% S 0,7
% O 3,1

Die extrahierten Kügelchen wurden sodann unter zeitweiligem Aufrühren an Luft erhitzt (4 Stunden 250°C, 1 Stunde 340°C). Äußerlich war keine Veränderung feststellbar; die Gewichtszunahme betrug 2,6 %.

Die Elementaranalyse lautete:

% C 85,2
% H 2,6
% N 1,2
% S 0,8
% O 10,2

Bei der anschließenden Carbonisierung (Temperaturanstieg auf 700°C) trat ein Gewichtsverlust von 22,6 % auf.

Die Elementaranalyse lautete:

% C 96,6
% H 0,4
% N 1,2
% S 0,6
% O 1,2

Die Aktivierung wurde mit Wasserdampf bei 820°C in Wirbelschicht durchgeführt. Gewichtsverlust 12 %. Die BET-Oberfläche betrug 730 m²/g

**Beispiel 2**

Herstellung des flexiblen Flächengebildes

Ein Baumwollgewebe (90 g/m²) wurde mit einer Paste aus 100 Teilen vorpolymerisiertem, maskiertem Isocyanat (Impranil 43034), 3,5 Teilen $Sb_2O_3$, 6,5 Teilen Dekabromdiphenyläther, 2 Teilen Kieselsäure einer inneren Oberfläche nach BET von 380 und 13,5 Teilen eines aromatischen Triamins als Vernetzer für das Isocyanat (Impranil 43035) mittels einer 14-mesh-Schablone punktförmig bedruckt. Die Auflagemenge betrug etwa 20 g/m².

Die Warenbahn wurde hinter dem Druckwerk mit Adsorberkügelchen von Beispiel 1 bestreut, der Überschuß wurde entfernt und der Kleber vernetzt. Es konnten 120 bis 140 g Adsorber-Kügelchen pro m² Träger abriebfest verankert werden. Das so erhaltene flexible Flächenfilter hatte eine Luftdurchlässigkeit von 900 l/m² sec bei 10 mm Wassersäule. Seine Filterleistung gegenüber Lost und Nervengiften übertraf die Forderungen.

**Beispiel 3**

Ein wie in Beispiel 2 hergestelltes Flächenfilter wurde auf der ünbeladenen Seite mit der gleichen Druckvorrichtung mit der Dispersion eines selbstvernetzenden Acrylats bedruckt (Auflage 18 g/m²), mit inkapsulierten Enzymen (Ø 0,1 - 0,2 mm) berieselt und nach Entfernen des Überschusses bei 30°C getrocknet. Auf diese Weise wurden 30 g Enzym enthaltende Gel-Kügelchen aufgebracht.

**Patentansprüche**

1. Flächenfilter aus einem luftdurchlässigen textilen Trägermaterial und darauf mit einem Kleber in gleichmäßiger Verteilung fixierten Aktivkohle-Teilchen eines Durchmessers von 0,1 bis 1 mm, dadurch gekennzeichnet, daß der Kleber mittels einer Schablone als punkt- oder linienförmiges Muster einer Höhe von 0,05 bis 0,5 mm und eines Durchmessers bzw. einer Breite von 0,2 bis 1 mm aufgedruckt ist, das nur 30 bis 70 % der Oberfläche des Trägermaterials bedeckt, und daß der Kleber ein lösungsmittelfreies Polyurethan, ein selbstvernetzendes Acrylat oder ein Schmelzkleber ist.

2. Flächenfilter nach Anspruch 1, dadurch gekennzeichnet, daß die Aktivkohle-Teilchen eine innere Oberfläche von 600 bis 1500 m²/g und einen Durchmesser von 0,2 bis 0,4 mm haben.

3. Flächenfilter nach Anspruch 1 oder 2, dadurch gekennzeichnet, daß die Menge der aufgetragenen Aktiv-Kohleteilchen 10 bis 200, vorzugsweise 60 bis 150 g/m², beträgt.

4. Flächenfilter nach einem der Ansprüche 1 bis 3, dadurch gekennzeichnet, daß die Aktivkohle-Teilchen mit einem für chemische Kampfstoffe durchlässigen Material ummantelt sind, welches die Aktivkohle-Teilchen gegen äußere Einflüsse schützt.

5. Flächenfilter nach einem der Ansprüche 1 bis 4, dadurch gekennzeichnet, daß dem Kleber Flammschutzmittel zugegeben sind, die das gesamte Flächenfilter schwer entflammbar machen.

6. Flächenfilter nach einem der Ansprüche 1 bis 5, dadurch gekennzeichnet, daß an dem aufgebrachten Kleber zusätzlich inkapsulierte Enzyme fixiert sind.

7. Flächenfilter nach einem der Ansprüche 1 bis 6, dadurch gekennzeichnet, daß inkapsulierte Enzyme mit einem Kleber auf der anderen Seite der flexiblen Trägerschicht aufgebracht sind.

8. Flächenfilter nach einem der Ansprüche 1 bis 7, dadurch gekennzeichnet, daß die Aktivkohle-Teilchen aus Bitumen hergestellt sind.

9. Flächenfilter nach Anspruch 8, dadurch gekennzeichnet, daß aus Bitumen hergestellte Aktivkohle-Teilchen verwendet werden, wobei das Bitumen in einer damit nicht oder schlecht mischbaren Flüssigkeit, insbesondere Wasser, oberhalb seines Schmelzpunktes dispergiert und dann abgeschreckt wird, worauf die von der Flüssigkeit getrennten Bitumen-Kügelchen zur Entfernung klebender Bestandteile mit einem geeigneten Lösungsmittel, insbesondere einem Benzol-Methanol-Gemisch, extrahiert, mit Schwefelsäure getränkt und auf mindestens 600°C erhitzt werden, worauf die so erhaltenen carbonisierten Kohle-Teilchen aktiviert werden.

10. Flächenfilter nach Anspruch 8, dadurch gekennnzeichnet daß geschmolzenes Bitumen in einem inerten Gas zu Tröpfchen zerstäubt und auf 800 bis 1600°C erhitzt wird, worauf die so erhaltenen carbonisierten Kohle-Teilchen aktiviert werden.

11. Flächenfilter nach einem der Ansprüche 1 bis 7, dadurch gekennzeichnet, daß die Aktivkohle-Teilchen in der Weise erhalten werden, daß organische Kationenaustauscher einer Korngröße von 0,2 bis 1 mm im Wirbelbett rasch auf mindestens 600°C erhitzt und anschließend aktiviert werden.

12. Schutzanzug, enthaltend einen Flächenfilter nach einem oder mehreren der Ansprüche 1 bis 11.

## Claims

1. Surface filter of an air-permeable textile carrier material and, on it, evenly distributed activated carbon particles with a diameter of 0.1 to 1 mm, which are fixed by an adhesive, characterised in that the adhesive is printed on by means of a template as a punctiform or linear pattern at a height of from 0.05 to 0.5 mm and a diameter or respectively width of from 0.2 to 1 mm, which only covers 30 to 70% of the surface of the supporting material, and that the adhesive is a solvent-free polyurethane, a self-crosslinking acrylate or a fusion adhesive.

2. Surface filter according to Claim 1, characterised in that the activated carbon particles have an interior surface of from 600 to 1500 m²/g and a diameter of from 0.2 to 0.4 mm.

3. Surface filter according to Claim 1 or 2, characterised in that the quantity of the applied activated carbon particles amounts to from 10 to 200, preferably from 60 to 150 g/m².

4. Surface filter according to one of Claims 1 to 3, characterised in that the activated carbon particles are encased by a material which is permeable to chemical warfare substances and which protects the activated carbon particles from external influences.

5. Surface filter according to one of Claims 1 to 4, characterised in that fireproofing agents are added to the adhesive, which make the entire surface filter flame-resistant.

6. Surface filter according to one of Claims 1 to 5, characterised in that additionally encapsulated enzymes are fixed to the applied adhesive.

7. Surface filter according to one of Claims 1 to 6, characterised in that encapsulated enzymes are applied with an adhesive on the other side of the flexible carrier layer.

8. Surface filter according to one of Claims 1 to 7, characterised in that the activated carbon particles are produced from bitumen.

9. Surface filter according to Claim 8, characterised in that activated carbon particles produced from bitumen are used, in which the bitumen is dispersed in a fluid which is immiscible or poorly miscible therewith, in particular water, above its melting point, and is then quenched, after which the bitumen pellets, separated from the fluid, are extracted with a suitable solvent, particularly a benzene/methanol mixture to remove adherent components, soaked with sulphuric acid and heated to at least 600°C, after which the carbonised carbon particles thus obtained are activated.

10. Surface filter according to Claim 8, characterised in that molten bitumen is atomized to droplets in an inert gas and heated to 800 to 1600°C, after which the carbonised carbon particles thus obtained are activated.

11. Surface filter according to one of Claims 1 to 7, characterised in that the activated carbon particles are obtained in such a manner that organic cation exchangers of a grain size of 0.2 to 1 mm are rapidly heated in a fluidized bed to at least 600°C and are then activated.

12. Protective clothing containing a surface filter according to one or more of Claims 1 to 11.

## Revendications

1. Filtre de surface en matière support textile perméable à l'air et comportant des particules de charbon actif d'un diamètre de 0,1 à 1 mm fixées par une colle en répartition uniforme, caractérisé en ce que la colle est imprimée au moyen d'un gabarit sous la forme d'un dessin ponctuel ou linéaire d'une hauteur de 0,05 à 0,5 mm et d'un diamètre ou d'une largeur de 0,2 à 1 mm, qui ne recouvre que 30 à 70 % de la surface de la matière support et en ce que la colle est un polyuréthanne exempt de solvant, un acrylate autoréticulant ou une colle à fusion.

2. Filtre de surface selon la revendication 1, caractérisé en ce que les particules de charbon actif ont une surface interne de 600 à 1500 m²/g et un diamètre de 0,2 à 0,4 mm.

3. Filtre de surface selon la revendication 1 ou la revendication 2, caractérisé en ce que la quantité des particules de charbon actif appliquées est de 10 à 200, de préférence 60 à 150 g/m².

4. Filtre de surface selon l'une des revendications 1 à 3, caractérisé en ce que les particules de charbon actif sont entourées d'une matière perméable aux agents chimiques de combat et qui protège les particules de charbon actif contre des influences externes.

5. Filtre de surface selon l'une des revendications 1 à 4, caractérisé en ce qu'on ajoute à la colle des agents de protection contre les flammes qui rendent difficilement inflammable tout le filtre de surface.

6. Filtre de surface selon l'une des revendications 1 à 5, caractérisé en ce qu'on fixe additionnellement des enzymes encapsulés sur la colle appliquée.

7. Filtre de surface selon l'une des revendications 1 à 6, caractérisé en ce que des enzymes encapsulés sont appliqués par une colle sur l'autre côté de la couche support flexible.

8. Filtre de surface selon l'une des revendications 1 à 7, caractérisé en ce que les particules de charbon actif sont préparées à partir de bitume.

9. Filtre de surface selon la revendication 8, caractérisé en ce qu'on utilise des particules de charbon actif préparées à partir de bitume, le bitume étant dispersé au-dessus de son point de fusion dans un liquide, en particulier de l'eau, qui ne peut s'y mélanger ou ne peut que s'y mélanger faiblement et est ensuite refroidi brusquememt, les petites sphères de bitume séparées du liquide étant alors extraites pour éliminer les composants collants avec un solvant approprié, en particulier un mélange de benzène-méthanol, étant imprégnées d'acide sulfurique et étant chauffées à au moins 600°C, les particules de charbom carbonisées ainsi obtenues étant ensuite activées.

10. Filtre de surface selon la revendication 8, caractérisé en ce que du bitume fondu dans un gaz inerte est pulvérisé en gouttelettes et est chauffé de 800 à 1600°C, les particules de charbon carbonisées ainsi obtenues étant alors activées.

11. Filtre de surface selon l'une des revendications 1 à 7, caractérisé en ce que les particules de charbon actif sont obtenues de manière que des échangeurs de cations organiques d'une granulométrie de 0,2 à 1 mm soient chauffés rapidement à au moins 600°C dans un lit tourbillonnant et ensuite activés.

12. Vêtement de protection contenant un filtre de surface selon une ou plusieurs des revendications 1 à 11.